Europäisches Patentamt

European Patent Office

Office européen des brevets

(11) Publication number: **0 048 503**
**B1**

(12) **EUROPEAN PATENT SPECIFICATION**

(45) Date of publication of patent specification: 21.08.85

(51) Int. Cl.⁴: **B 21 B 37/10,** F 16 L 59/08, **B 21 B 3/02**

(21) Application number: 81108860.8

(22) Date of filing: 24.04.79

(88) Publication number of the earlier application in accordance with Art. 76 EPC: **0 005 340**

(54) Heat shield arrangements for strip or billet-form material.

(30) Priority: 27.04.78 GB 1670478

(43) Date of publication of application:
31.03.82 Bulletin 82/13

(45) Publication of the grant of the patent:
21.08.85 Bulletin 85/34

(84) Designated Contracting States:
BE DE FR IT LU NL

(56) References cited:
GB-A-1 040 420
US-A-3 264 856

(73) Proprietor: ENCOMECH ENGINEERING
SERVICES LIMITED
729 London Road
Hounslow, TW3 1SE (GB)

(72) Inventor: Laws, William Robert
19 Tudor Avenue
Worcester Park Surrey (GB)
Inventor: Reed, Geoffrey Ronald
8 Beechdene
Tadworth Surrey (GB)

(74) Representative: Gura, Henry Alan et al
MEWBURN ELLIS & CO. 2/3 Cursitor Street
London EC4A 1BQ (GB)

Courier Press, Leamington Spa, England.

# Description

This invention relates to heat shields and it is concerned particularly with heat shields for use in metal processing.

In steel mill processing, whether of billets or strip, the metallurgical qualities of finished product are closely related to the accurate control of temperature of the material during the hot rolling process. For example, a modern hot strip mill producing steel coil is several hundred metres long and, typically steel slabs or billets may be reduced from 25 cms thickness to 0.2 cms using several roughing mill stands and five or more finishing mill stands. During the rolling process considerable heat losses occur so that the slabs have to be heated initially well in excess of the temperature requirement at the end of the process, but a particular problem has been that the heat losses from slabs passing along the mill depend upon the time taken. If the slabs are delayed, excessive heat losses occur and the steel strip does not have its required rolling temperatures, so that it may have to be downgraded or even scrapped. In many long modern rolling mills the delay of one length of strip at the finishing end has an effect on the several lengths of material which are simultaneously at various preceding stages of rolling. Thus with more stringent quality specifications it is becoming more important to reduce the rate of heat loss from the material during transport between stands.

There is an added difficulty in this because during the final reduction stages the back end of the strip takes longer to pass through the finishing mills and so there is a temperature "run-down" along the steel strip due to the cumulative time delay along the length of the strip. The effect of temperature "run-down" is to some extent ameliorated by accelerating the finishing mills during the rolling of each individual slab or strip, but nevertheless it remains a problem.

Attempts have been made in the past to reduce the heat loss from the top surface of a hot strip during transport from the roughing mills to the finishing mills. Because radiation is a major source of heat loss at the temperatures involved (around 1060°C) aluminium reflectors have been fixed over the path of the hot strip to reduce temperature "run-down". However maintenance problems limit the usefulness of reflectors which become inefficient as soon as they become dirty and in addition, the aluminium reflectors which have been used for their high reflectively and relatively low cost can reach their melting temperature if their reflectivity decreases.

It has been proposed (GB—A—1040420) to use heat-insulating or relfecting panels as heat shields disposed in series over a rolling mill delay table so as to reduce the loss of heat from hot sheet material on the table, and a pyrometer immediately in front of each panel is able to actuate displacement of its panel transversely away from the table. Thus, when the strip advances onto the delay table each insulating panel will be moved to its operative position over the strip if the pyrometer senses a strip temperature significantly less than a preset value and if the temperature rises above the preset value the panels are displaced laterally clear of the table and the strip.

This arrangement, however, is only of limited value because it relies upon the temperature of the strip being sufficiently uniform over the region of each panel for effective control of the panel temperature to be obtained by the positioning of the heat-insulating panel in one of its two alternative positions. There can in fact be significant local temperature gradients, and it has been found that there may in particular be significant temperature differences across the width of a sheet of hot material — so that there is likely to be a substantially higher rate of cooling of the outer lateral margins of the sheet as compared with its central region.

According to the present invention, a heat shield arrangement is provided comprising a series of heat-insulating panels mounted above a path for the hot material, the panels each having a heat-insulating core and a cover plate forming or overlying a main face of each panel being adapted to act as a hot face presented to the material being processed and to radiate heat back to the material, characterised in that the panels of the series are arranged in groups of two or more panels disposed side-by-side across the lateral extent of the path of the material, and means are connected to said plurality of panels for displacing the panels with respect to each other for varying their heat-insulating effect on a central region of the hot material relative to the lateral margins thereof at least one array of temperature sensors being laterally spaced across the material path, and control means actuated by said sensors being connected to said displacement means in order to control the temperature and/or the transverse temperature profile of the material being processed in accordance with predetermined values.

Said displacement of the panels may take place by movement of the laterally opposed panels towards and away from each other maintaining their height above the material path, or it can involve tilting of the panels so that they are raised relative to the central region of the material path and therefore have a lesser effect there, but preferably the displacement means are adapted to provide both these motions alone or in combination.

A heat shield arrangement according to the invention preferably also has heat-insulating panels disposed below the material path. These panels also may be arranged to be displaceable for varying the heat-insulating effect across the width of the material, e.g. by providing means for moving them laterally towards and away from each other.

On a conventional strip mill delay table, the sheet material path is defined by a series of rollers on which the material is supported. According to a preferred feature of the invention, said rollers comprise upper smaller diameter rollers upon which the material rests, and lower larger diameter rollers that support the upper rollers. In this way, it is possible to increase the proportion of the lower face of the material path that is shielded by the lower series of heat-insulating panels, since these panels can overlap the larger rollers to extend close to the upper, smaller diameter rollers, and so improve the uniformity of the heat-shielding effect.

Also, the heat transfer by conduction through the smaller diameter upper rollers will be less than for the larger diameter rollers of a conventional rolling mill table, and this loss can be further reduced by limiting the contact area between the upper and lower rollers, in particular by arranging that the upper rollers are only in contact with a plurality of axially spaced larger diameter portions formed on the lower rollers.

The invention will be described by way of example with reference to the accompanying diagrammatic drawings, wherein:—

Fig. 1 is a transverse cross-section of a transfer conveyor or roller table in a steel strip mill provided with a heat shield arrangement according to the invention, and also shows in outline some of the modes of adjustment of the arrangement,

Fig. 2 is a schematic illustration of the control means for the arrangement of Fig. 1,

Fig. 3 illustrates the movement of the support arms in the arrangement of Fig. 1,

Figs. 4 and 5 illustrate some modifications of the panels of the heat shield arrangement,

Fig. 6 is a longitudinal section showing a feature of a heat shield arrangement according to the invention that may be also used in conjunction with the arrangement of Fig. 1, and

Figs. 7 and 8 illustrate in mutually transverse sections a modified roller construction that can be employed in a roller table provided with a heat shield arrangement according to the invention.

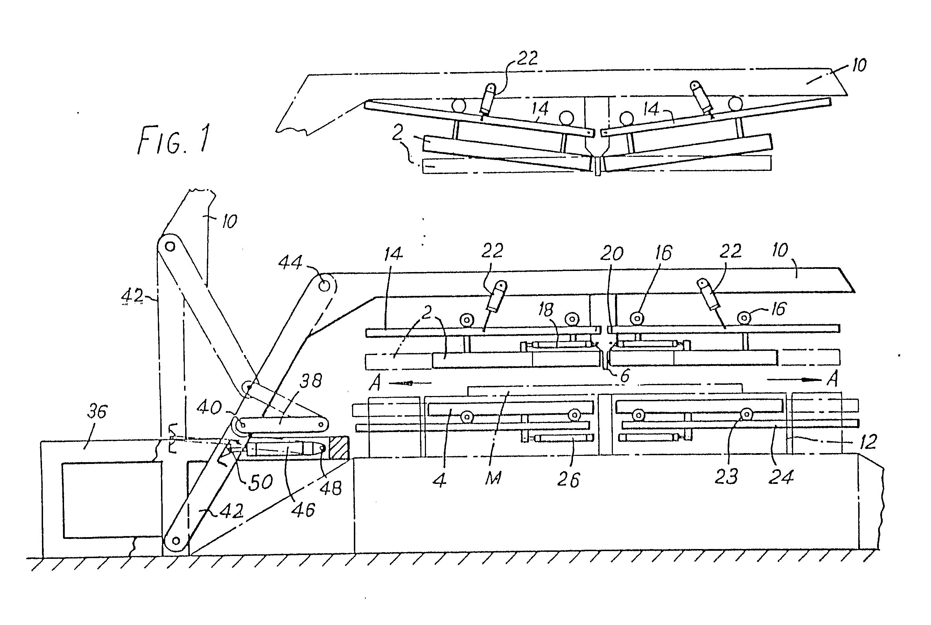

Referring firstly to Fig. 1 of the drawings, respective upper and lower series of heat-insulating panels 2, 4 are mounted above and below the material path M along a roller table of a steel strip mill. The panels of each series are shown mounted in pairs side-by-side but in wider mills four panels side-by-side may be required. The panels are arranged in a row or rows extending along the strip-conveying direction to make up the required heat shield area. Running longitudinally with the upper series of panels, but not directly secured to them are skid or bumper bars 6 or like contact members that project below the panels intermediate their width.

The upper panels 2 are mounted on displaceable support means comprising a series of cantilever arms 10 at intervals along the material path, each arm extending over the conveyor rolls 12 for the steel strip M, so that the panels are able to cover the entire upper face of the strip. The cantilever arms are displaceable to move the panels towards and away from the strip and the panels themselves are displaceable on the support structure to regulate their effect on the strip.

For the latter purpose the panels 2 may be conveniently arranged in pairs with the central bumper bar 6 independently mounted between them. The panels are supported by transverse guides or rails 14 that are secured below the cantilever arms and are suspended from rollers 16 running on the rails so that they can be displaced laterally towards and away from each other by first displacement means consisting of rams 18 as indicated by the arrows A in Fig. 1. Each rail is pivoted at its inner end 20 and connected by further displacement means consisting of rams 22 to the arms 10, so that by operation of the rams the rails can be tilted about their pivots, and in particular can be so tilted as to raise the laterally outer edges of the panels as shown in outline in Fig. 1. The lower heat shield panels 4 below the strip path are also mounted through rollers 23 on rails 24 or like guides, which in this instance are fixed, so as to be movable laterally inwards and outwards by displacement means consisting of rams 26 in the same manner as the upper panels.

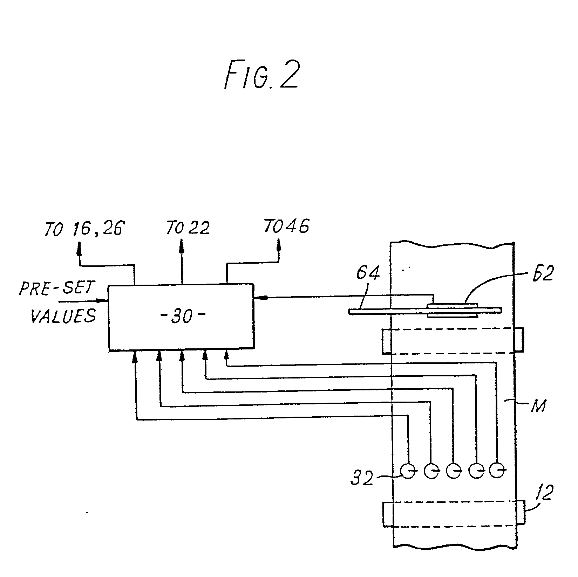

The movements of the rams during the operation of the arrangement to control the temperature of a steel strip travelling along the conveyor path is governed by a control unit 30 (Fig. 2) receiving signals from an array of temperature sensors 32 disposed across the width of the strip. If the sensors indicate that the temperature at the edges of the strip is too high, the rams 22 between the cantilever arms and the upper rails 14 can be operated to tilt the outer edges of the upper panels upwards, the angle being adjusted to suit the required heat loss rate. If, on the other hand, the temperature at the centre of the strip is too high the panels 2 and/or 4 can be traversed on their rails so as to leave a gap at the centre, both above and below the strip to allow increased radiation from that region. The extent of the opening movement and the number of panels opened along the length of the conveyor path can both be adjusted to suit the extent of the temperature correction required.

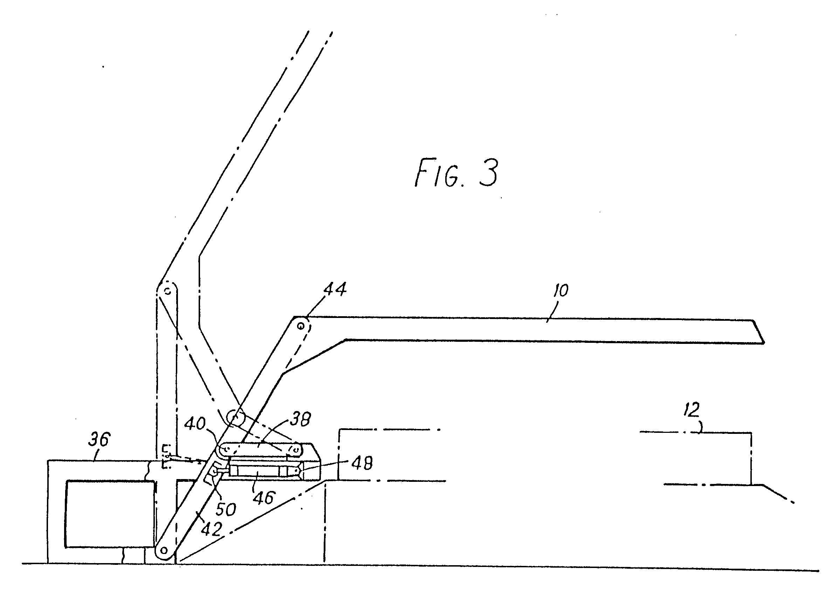

It is also possible to lift the support structure comprising the cantilever arms 10, together with the panels 2, this serving both as a means of temperature control for the strip and as a means of protection of the panels against damage from a bent or buckled strip. For this purpose, as may be more clearly seen from Fig. 3, each arm 10 is mounted on a fixed frame 36 through a lifting mechanism comprising a normally horizontally shorter link 38 pivoted at 40 to the lower end of the arm and a longer link 42 pivoted at 44 intermediate the length of the arm and normally lying parallel to the cranked end portion of the arm. The arm 10 is displaced by drive means comprising a ram 46 attached to one end 48 to the frame 36 and its other end 50 being connected to the longer link 42. The mechanism operates, when the ram 46 is extended, to produce a magnified pivoting movement of the arm 10, as shown in Fig. 3, the stroke of the ram being set so that the panels can be raised to a nearly vertical position, leaving clear access to the roller table.

As already indicated, the ram 46 can be operated by the automatic control means to regulate the temperature of the material. This can be done when it is required to lower the temperature of the strip as a whole rather than alter the temperature distribution, and normally it will be sufficient for only a small length of the total length of the upper series of heat shield panels to be lifted away for this purpose. The number of panels so raised will determine the cooling effect obtained. The rams 46 may also be automatically operated if a bent or buckled strip is in the mill. The bumper bars 6 provide initial protection in this eventuality but they can also be provided with sensor elements (not shown) such as pressure-sensitive switches so that as the strip bears against them to lift them, the sensor elements actuator the rams 46 and the upper panels are immediately raised clear of the strip, whether or not they have actually been contacted by the deformed strip.

It will be understood that the control unit may comprise means for readily adjusting the set points or required temperature limits to suit different materials being processed, and there may be a number of arrays of temperature sensors at different stations along the length of the strip conveyor path, either operating upon the same control unit or operating upon separate control units for individual stations on the conveyor path.

Additionally or alternatively to the bumper bars, one or more further support arms may carry a bent stock detector 62 (Fig. 2) having a contact member disposed over the conveyor upstream of the panels to indicate the approach of raised parts of the strip that might damage the panels and thereby actuate lifting of the panels. The detector can comprise a support arm 64 pivoted on a simple pivot mounting by a ram to swing the detector clear of the conveyor when required, but it may alternatively have the same form of displacement mechanism as the panel support arms 10.

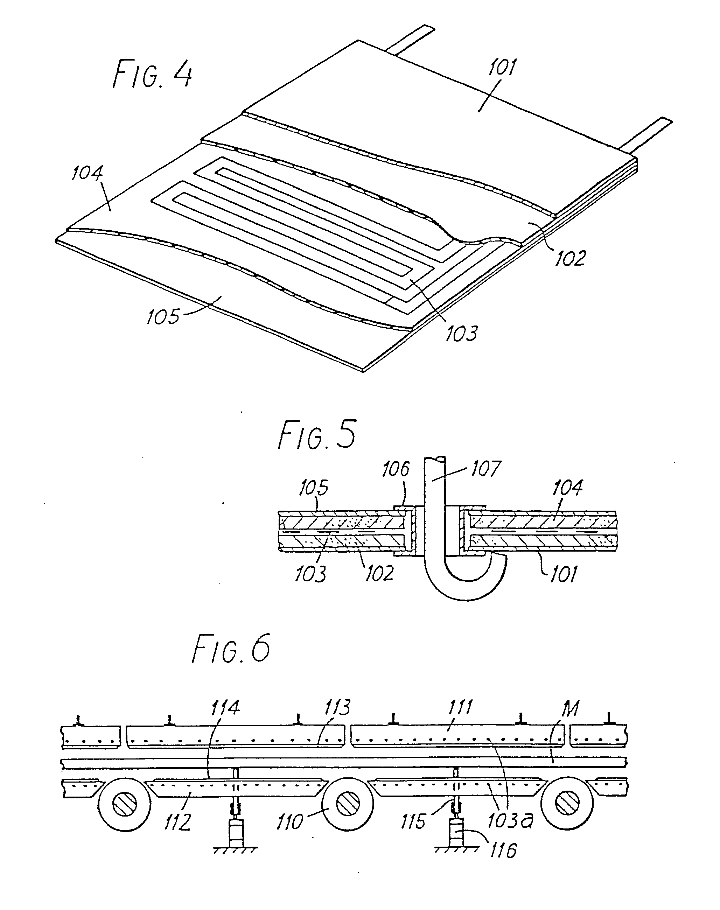

The panels 2, 4 have a thin heat-resistant hot face confronting the material being processed, said face being backed by a heat-insulating core. A preferred construction is shown and described in our European patent specification EP—A— 0 005 340, and as is also described there, in some circumstances it may be required not only to conserve the heat in the material being processed but also to apply further heating. For example, this might be necessary if the material is to be held at a constant temperature. It is possible then to provide heating means in or on the insulation panels themselves, as is illustrated in Fig. 4 and Fig. 5. These show a multi-layer cover plate, with a front plate 101 forming the hot face of the panel, a first electrically insulating layer 102, an electrical strip heating element 103 capable of operating at a temperature of 1100°C or more, a second insulating layer 104, and a back plate 105 that like the front plate is suitable for use at high temperature. The layers are secured together by hollow rivets 106 that may also serve to receive suspension ties 107 for the panel, although panels with cover plates of this construction are suitable for mounting both above and below the material being shielded. To maintain the material temperature, the element 103 may be of relatively low power, e.g. up to 5 kw/m$^2$, but higher powers may be used when required. It will be clear without further illustration that the cooling unit 30 can also regulate the operation of the heating elements.

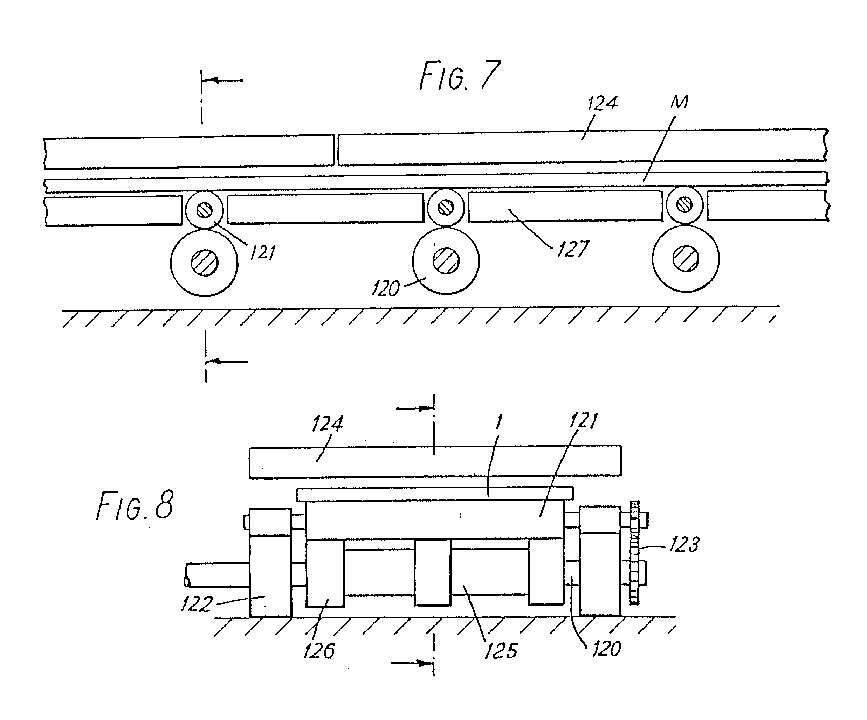

The use of panels with heating elements is shown in the heat shield arrangement in Fig. 6, although tubular sheathed elements 103a are illustrated. This example shows a further heat conservation measure, it being assumed that the arrangement is employed with an existing steel mill roller table, which will be equipped with large diameter rollers 110 of high thermal capacity often water-cooled. The upper and lower thermal insulation panels 111, 112 have the general composite construction already described and both series of panels are arranged in pairs side-by-side, with a central skid bar or like contact member 113 and 114 respectively, between the panels of each pair. The lower panels are also so constructed that there are two or more successive panels along the distance between adjacent rollers 110, and between these successive panels lifting members in the form of transversely extending lifting bars 115 are interposed. These bars, of a high temperature alloy and possibly also provided with heat insulation, can be raised, e.g. by fluid pressure rams 116, to the position shown and so lift the material M from the rollers 110. The mechanism can be used when the operation of the mill requires the material on the roller table to be stopped for any significant length of time. Because of the thermal mass and/ or the cooling of the rollers, there would be the risk that cold spots would develop in the material at the regions of contact with the rollers, and that these would affect the uniformity of the final product.

The problem of avoiding undue heat loss to the rollers can alternatively be overcome by modification of the roller table construction in the manner illustrated in Figs. 7 and 8. The main supporting rollers 120 have smaller rollers 121 resting on them, the rollers 121 being of a heat insulating material. Both series of rollers are journalled in a housing assembly 122 and are driven together, as by the gearing 123. It may be arranged that the housing assembly can readily be opened to remove the rollers 121 at least, when servicing is needed. The upper heat-insulating panels 124 can be lifted clear in the manner already described when this is to be done.

The main rollers preferably have reduced diameter portions 125 so that the contact area between the rollers 120, 121 is confined to the relatively small extent of the larger diameter portions 126, so reducing any heat loss through conduction. If scale drops from the material on the table this measure also helps the scale to fall clear. It is a further advantage in the use of the smaller diameter high-temperature rollers that the lower heat-insulating panels 127 can be brought closer together, so that there is a further reduction of heat loss by radiation.

EP—A—0 005 340, which has the same priority date and designates the same States, claims subject-matter described herein.

### Claims

1. A heat shield arrangement for hot strip or billet-form material being processed in a hot-rolling mill, the arrangement comprising a series of heat-insulating panels mounted above a path for the hot material, the panels each having a heat-insulating core and a cover plate forming or overlying a main face of each panel being adapted to act as a hot face presented to the material being processed and to radiate heat back to the material characterised in that the panels (2) of the series are arranged in groups of two or more panels disposed side-by-side across the lateral extent of the path of the material (M), and means (14—22) are connected to said panels for displacing the panels of a group with respect to each other for varying their heat-insulating effect on a central region of the hot material relative to the lateral margins thereof, at least one array of temperature sensors (32) being laterally spaced across the material path, and control means (30) actuated by said sensors being connected to said displacement means (14—22) in order to control the temperature and/or the transverse temperature profile of the material being processed in accordance with predetermined values.

2. A heat shield arrangement according to claim 1 wherein said displacement means (14, 16, 18) for said panels (2) disposed side-by-side are arranged to displace the panels laterally towards and away from each other.

3. A heat shield arrangement according to claim 1 wherein said displacement means (14, 20, 22) for said panels (2) disposed side-by-side are arranged to tilt the laterally outer regions of the panels towards and away from the material path to vary the heat-insulating effect of the panels in the outer lateral margins of material relative to the central region thereof.

4. A heat shield arrangement according to claim 2 together with Claim 3 wherein said panels are displaceable both towards and away from each other and by tilting as aforesaid.

5. A heat shield arrangement according to any one of the preceding claims wherein said series of panels are mounted on displaceable supports (10) to be also jointly displaceable towards and away from the material path.

6. A heat shield arrangement according to any one of the preceding claims wherein at least some of the panels are provided with heating means (103) regulated by said control means (30).

7. A heat shield arrangement according to any one of the preceding claims further comprising a lower series of heat-insulating panels (4) disposed below the material, and means (26) are connected to said plurality of panels of the lower series for displacing the panels towards and away from each other to vary their heat-insulating effect on a central region of the material relative to lateral margins thereof.

8. A heat shield arrangement according to any one of the preceding claims wherein the panels each comprise a protective casing for the heat-insulating core (74, 75) and the cover plate (73) forms or overlies a main face of said casing and is supported thereon at its periphery.

9. A heat shield arrangement according to any one of the preceding claims wherein at least some of the panel cover plates (73) are provided with corrugations, dimples or other local contouring.

10. A heat shield arrangement according to any one of the preceding claims wherein heating means (103) are provided in at least some of the panels immediately adjacent their cover plates.

### Revendications

1. Dispositif de protection thermique pour matériaux en bande ou sous forme de billette traités dans un laminoir à chaud, le dispositif comprenant une série de panneaux d'isolement thermique montés au-dessus d'un trajet du matériau chaud, chaque panneau ayant une âme d'isolement thermique et une plaque de recouvrement formant ou recouvrant une face principale de chaque panneau et pouvant servir de face chaude présentée au matériau qui est traité et pour re-reyonner le chaleur vers le matériau caractérisé en ce que les panneaux (2) de la série sont agencés par groupes de deux panneaux ou plus disposés côte-à-côte sur l'étendue latérale du trajet du matériau (M), et des moyens (14—22) sont connectés auxdits panneaux pour déplacer les panneaux d'un groupe les uns par rapport aux autres pour faire varier leur effet d'isolement thermique sur une région centrale du matériau chaud par rapport à ses bords latéraux, au moins un agencement de capteurs de température (32) étant latéralement espacés sur le trajet du matériau, et un moyen de contrôle (30) actionné par lesdits capteurs étant connecté audits moyens de déplacement (14—22) afin de contrôler la température et/ou le profil transversal de température du matériau qui est traité selon des valeurs préldé-terminées.

2. Dispositif de protection thermique selon la revendication 1 où lesdits moyens de déplacement (14, 16, 18) desdits panneaux (2) disposés côte-à-côte sont agencés pour déplacer les panneaux latéralement vers et au loin les uns des autres.

3. Dispositif de protection thermique selon la revendication 1 où lesdits moyens de déplacement (14, 20, 22) desdits panneaux (2) disposés côte-à-côte sont agencés pour faire basculer les régions latéralement externes des panneaux vers et au loin du trajet du matériau pour faire varier l'effet d'isolement thermique des panneaux dans les bords latéraux externes du matériaux par rapport à sa région centrale.

4. Dispositif de protection thermique selon la revendication 2 ainsi que la revendication 3 où lesdits panneaux sont déplaçables à la fois vers et au loin l'un de l'autre et en basculant comme ci-dessus.

5. Dispositif de protection thermique selon l'une quelconque des revendications précédentes où ladite série de panneaux est montée sur des supports déplaçables (10) pour être également conjointement déplaçable vers et au loin du trajet du matériau.

6. Dispositif de protection thermique selon l'une quelconque des revendications précédentes où au moins certains des panneaux sont pourvus de moyens chauffants (103) réglés par ledit moyen de contrôle (30).

7. Dispositif de protection thermique selon l'une quelconque des revendications précédentes comprenant de plus une série inférieure de panneaux d'isolement thermique (4) disposés en-dessous du matériau et des moyens (26) sont connectés à ladite quantité de panneaux de la série inférieure pour déplacer les panneaux vers et au loin les uns des autres pour faire varier leur effet d'isolement thermique sur une région centrale du matériau par rapport à ses bords latéraux.

8. Dispositif de protection thermique selon l'une quelconque des revendications précédentes où chaque panneau comprend un logement protecteur pour une âme d'isolement thermique (74, 75) et la plaque de recouvrement (73) forme ou recouvre une face principale dudit logement et y est supportée par son pourtour.

9. Dispositif de protection thermique selon l'une quelconque des revendications précédentes où au moins certaines des plaques (73) de recouvrement des panneaux sont pourvues d'ondulations, rides ou autre dénivellement local.

10. Dispositif de protection thermique selon l'une quelconque des revendications précédentes où des moyens de chauffage (103) sont prévus dans au moins certains des panneaux immédiatement adjacents à leurs plaques de recouvrement.

**Patentansprüche**

1. Hitzeschild für band- oder knüppelförmiges Material, das in einem Warmwalzwerk behandelt wird, bestehend aus einer Reihe wärmeisolierender Tafeln, die über einer Bahn für das heiße Material angeordnet sind, wobei die Tafeln jeweils einen wärmeisolierenden Kern und eine Abdeckplatte aufweisen, die eine Hauptfläche einer jeden Tafel bildet oder bedeckt und als heiße Fläche wirkt, die dem zu behandelnden Material zugekehrt ist und Wärme an das Material zurückstrahlen kann, dadurch gekennzeichnet, daß die Tafeln (2) der Reihen in Gruppen von zwei oder mehr Tafeln angeordnet sind, die über die Breitenerstreckung der Bahn des Materials (M) hinweg nebeneinander angeordnet sind, und daß Mittel (14—22) mit den Tafeln verbunden sind, um die Tafeln einer Gruppe gegeneinander zu verlagern, um deren wärmeisolierende Wirkung auf einen zentralen Bereich des heißen Materials relativ zu dessen Randbereichen zur verändern, wobei mindestens eine Reihe von Temperaturfühlern (32) im seitlichen Abstand quer zur Materialbahn angeordnet ist und wobei von diesen Temperaturfühlern betätigte Steuermittel (30) mit den Verlagerungsmitteln (14—22) verbunden sind, um die Temperatur und/oder das Temperaturprofil in Querrichtung des behandelten Materials gemäß vorgegebenen Werten zur steuern.

2. Hitzeschild nach Anspruch 1, wobei die Verlagerungsmittel (14, 16, 18) für die nebeneinander angeordneten Tafeln (2) so angeordnet sind, um die Tafeln seitwärts zueinander hin oder voneinander weg zu verlagern.

3. Hitzeschild nach Anspruch 1, wobei die Verlagerungsmittel (14, 20, 22) für die nebeneinander angeordneten Tefeln (2) so angeordnet sind, um die außenliegenden Bereiche der Tafeln zu der Materialbahn hin oder von dieser weg zu schwenken, um die wärmeisolierenden Wirkung der Tafeln in den äußeren Randbereichen des Materials relativ zu dessen mittlerem Bereich zu verändern.

4. Hitzeschild nach Anspruch 2 und 3, wobei die Tafeln sowohl zueinander hin und voneinander weg verlagerbar als auch schwenkbar sind.

5. Hitzeschild nach einem der vorhergehenden Ansprüche, wobei die Reihe von Tafeln auf verlagerbaren Abstützungen (10) angeordnet sind, damit sie auch gemeinsam zu der Materialbahn hin und von dieser weg verlagerbar sind.

6. Hitzeschild nach einem der vorhergehenden Ansprüche, dadurch gekennzeichnet, daß zumindest einige der Tafeln mit Heizmitteln (103) versehen sind, die von der Steuereinrichtung (30) gesteuert sind.

7. Hitzeschild nach einem der vorhergehenden Ansprüche, die ferner eine untere Reihe von wärmeisolierenden Tafeln (4) aufweist, die unter dem Material angeordnet ist, wobei mit den Tafeln der unteren Serie Einrichtungen (26) verbunden sind, um die Tafeln zueinander hin oder voneinander weg zu verlagern, damit sich deren wärmeisolierende Wirkung auf einen mittleren Bereich des Materials in Bezug auf dessen Randbereiche ändert.

8. Hitzeschild nach einem der vorhergehenden Ansprüche, wobei jede Tafel aus einem Schutzgehäuse für den wärmeisolierenden Kern (74, 75) besteht, und wobei die Abdeckplatte (73) eine Hauptfläche des Gehäuses bildet oder abdeckt und an ihrem Umfang an demselben abgestützt ist.

9. Hitzeschild nach einem der vorhergehenden Ansprüche, wobei zumindest einige der Tafel-Abdeckplatten (73) mit Rippen, Vertiefungen oder einer anderen örtlichen Profilierung versehen sind.

10. Hitzeschild nach einem der vorhergehenden Ansprüche, wobei die Heizmittel (103) zumindest in einigen der Tafeln unmittelbar neben deren Abdeckplatten angeordnet sind.

FIG. 1

0 048 503

# FIG. 2

TO 16, 26     TO 22     TO 46

PRE-SET
VALUES

-30-

64

62

M

32

12

FIG. 3

36  40  38  44  10  12  48  46  50  42

0 048 503

3

*FIG. 4*

101

104

105

103

102

*FIG. 5*

105    106    107    104

103   102    101

*FIG. 6*

114    113    111    M

112    110    115    103a

116

FIG. 7

FIG. 8